# EUROPEAN PATENT APPLICATION

(11) **EP 4 803 222 A1**
(43) Date of publication of application: **09.09.2026**
(21) Application number: 25765458.2
(22) Date of filing: 05.03.2025
(51) Int. Cl.: B21D 22/02, B21D 37/16, B21D 43/10, C21D 1/667

(54) **HOT-FORMING APPARATUS AND SYSTEM**

(30) Priority: 24.01.2025 CN 202510122620
(71) Applicant: Hailian Jinhui Intelligent Equipment (Qingdao) Co., Ltd., Tongji Sub-district, Jimo District Qingdao, Shandong 266299 (CN)
(72) Inventor: LIN, Cong, Qingdao, Shandong 266299 (CN); WANG, Meng, Qingdao, Shandong 266299 (CN)
(74) Representative: Lorenz Seidler Gossel Part. mbB
(86) International application number: PCT/CN2025/080654
(87) International publication number: WO 2026/156979

(57) **Abstract**

Provided are a hot-forming apparatus and a hot-forming system. The hot-forming apparatus includes an apparatus frame, an upper slider, a lower slider, a transmission assembly mounted on the apparatus frame, and a controller. The transmission assembly includes a power component, a gear-shaped power conversion component connected to the power component, a gear-shaped torque transfer mechanism connected to the power conversion component, and a feedback encoder configured to obtain a rotation angle of the torque transfer mechanism. The torque transfer mechanism is configured to drive the upper slider to move towards or away from the lower slider. The controller is connected to the power component and the feedback encoder and is configured to control operation of the power component based on the rotation angle of the torque transfer mechanism obtained by the feedback encoder. The hot-forming apparatus can enhance the processing precision of workpieces.

## Description

The present application claims the priority to Chinese Patent Application No. 202510122620.0, titled "HOT-FORMING APPARATUS AND HOT-FORMING SYSTEM", filed on January 24, 2025 with the China National Intellectual Property Administration, which is incorporated herein by reference in its entirety.

### FIELD

The present application relates to the technical field of hot-forming, and in particular to a hot-forming apparatus and a hot-forming system.

### BACKGROUND

With the stringent control over energy consumption in the current automotive industry and the rapid growth of new energy vehicles, the demands for vehicle safety and lightweight design have become increasingly urgent. Hot-formed steel, due to its ultra-high strength and low processing difficulty, is widely used in vehicle structural components. The main production process for the hot-formed steel involves heating steel plates to a high temperature to achieve full austenitization of their microstructure, followed by rapid cooling of the steel plates. This process comprehensively enhances the strength of the steel plates, increasing their yield strength to over 1000 MPa. Moreover, there is a substantial increase in demand for components with differentiated cold and hot zones, especially for battery protection, which requires both high workpiece strength and excellent welding performance of the same component.

The stamping and forming apparatus in the related technologies typically has a stamping press structure. It performs contouring pressing on the hot-formed parts using molds, and utilizes water to transfer heat to quench the hot-formed parts. This approach necessitates a large-tonnage apparatus, leading to high energy consumption, substantial costs for manufacturing the apparatus, and a large footprint of the apparatus. For specific work conditions requiring frequent and precise positioning operations at different locations, such apparatus usually fails to meet the requirements. Moreover, the main transmission power of this apparatus relies on hydraulic mechanisms, and the use of hydraulic oil may have adverse effects on the surrounding environment. Alternatively, some hot-forming machines may also be applicable, which enable rapid assembly and disassembly of upper and lower platens, facilitating regular maintenance. However, theses hot-forming machines are also in the form of the conventional hydraulic press, and have high tonnage, elevated investment costs, extended maintenance costs and times.

Therefore, how to simplify the production process and reduce costs of the hot-forming apparatus is a technical issue that needs to be addressed by those skilled in the art.

### SUMMARY

An object of the present application is to provide a hot-forming apparatus and a hot-forming system that can effectively reduce the processing cycle for workpiece hot-forming, improve the efficiency and the processing precision.

In order to achieve the above object, the following technical solutions are provided according to the present application.

A hot-forming apparatus includes:
an apparatus frame;
an upper slider and a lower slider, which are mounted on the apparatus frame, where the upper slider is configured to drive an upper mold to move, and the lower slider is configured to support a lower mold;
a transmission assembly mounted on the apparatus frame, where the transmission assembly includes a power component, a power conversion component connected to the power component, a torque transfer mechanism connected to the power conversion component, and a feedback encoder configured to obtain a rotation angle of the torque transfer mechanism, both the power conversion component and the torque transfer mechanism are gear-shaped, and the torque transfer mechanism is configured to drive the upper slider to move towards or away from the lower slider; and
a controller, where both the power component and the feedback encoder are connected to the controller, and the controller is configured to control operation of the power component based on the rotation angle of the torque transfer mechanism obtained by the feedback encoder.

In another aspect, the transmission assembly further includes a brake transmission component configured to transmit power from the power component to the power conversion component. The brake transmission component is connected between the power component and the power conversion component and is connected to the controller. The controller is further configured to control the brake transmission component to stop when the upper slider moves to a target position.

In another aspect, the transmission assembly further includes a rotary connecting component. One end of the rotary connecting component is hinged to the torque transfer mechanism, and the other end of the rotary connecting component is hinged to the upper slider. The torque transfer mechanism is configured to drive the upper slider to move up and down through the rotary connecting component. The number of the power conversion component, the number of the torque transfer mechanism, and the number of the rotary connecting component are all at least two. The at least two power conversion components are symmetrically distributed on left and right sides of the brake transmission component, the at least two torque transfer mechanisms are symmetrically distributed on the left and right sides of the brake transmission component, and the at least two rotary connecting components are symmetrically distributed on the left and right sides of the brake transmission component. At least one of the rotary connecting components is connected to a left side of the upper slider, and at least another one of the rotary connecting components is connected to a right side of the upper slider.

In another aspect, a working surface is provided on an upper part of the lower slider. The working surface is provided with multiple positioning slots configured to position the lower mold and multiple fixing slots configured to fix the lower mold. The positioning slots and the fixing slots are arranged in arrays respectively.

In another aspect, the hot-forming apparatus further includes a hot-forming mold, which includes:
the upper mold and the lower mold, where a profile cavity configured to accommodate a workpiece is formed between the upper mold and the lower mold, each of the upper mold and the lower mold has a cavity inside and is provided with hollow portions at target positions on one side thereof close to the profile cavity, and the hollow portions are in communication with the cavity, allowing medium in the cavity to be injected onto the workpiece through the hollow portions;
multiple injection members, which are mounted in the cavity of the upper mold and/or the lower mold; and
multiple medium pipelines arranged in the cavities, where the multiple medium pipelines are configured to supply the medium to the injection members, with pressure in each of the medium pipelines being adjustable.

In another aspect, the hot-forming apparatus further includes an upper mold water supply mounting adapter configured to connect to an external pipeline.

The upper mold water supply mounting adapter is mounted on the apparatus frame. The upper mold is provided with a quick-release connector that is detachably connected to the upper mold water supply mounting adapter and is in communication with the medium pipeline.

In another aspect, the hot-forming apparatus further includes:
an exhaust gas collection component configured to collect exhaust gas during a quenching process, where the exhaust gas collection component is mounted at a top portion of the apparatus frame; and
a water circulation system configured to collect and recycle the medium, where the water circulation system includes: a circulating water collection tank configured to store cooling water collected from the hot-forming mold and perform primary filtration on the cooling water; a water return component configured to pump the cooling water from the hot-forming mold into the circulating water collection tank, and connected to the circulating water collection tank; a water storage tank component configured to store primarily filtered circulating water coming from the circulating water collection tank; a water supply component configured to obtain the primarily filtered circulating water from the circulating water collection tank and deliver the primarily filtered circulating water to the water storage tank component, the water storage tank component being connected with a water supply channel configured to deliver cooling water to the hot-forming mold; a secondary filter and/or a tertiary filter mounted on the water supply channel and configured to perform secondary and/or tertiary filtration on the cooling water in the water supply channel; and a high-pressure water pump mounted on the water supply pipe configured to adjust water supply pressure in the water supply channel within an adjustable range of 0 to 3 Mpa.

In another aspect, the hot-forming apparatus further includes a guiding mechanism mounted in the apparatus frame, and the upper slider is slidably connected to the guiding mechanism. The lower slider is slidably mounted in the apparatus frame and is slidable from inside to outside of the apparatus frame for mold replacement.

A hot-forming system is further provided according to the present application, including the hot-forming apparatus according to any one of the above solutions.

In another aspect, the hot-forming system further includes a tunnel furnace, a workstation loading device, an automatic loading robot, a gantry manipulator, and a medium supply and recovery device. The tunnel furnace is provided with a workpiece placement part, a heating zone, a heat retention zone, and an in-furnace gripping zone that are sequentially arranged from a loading end to an unloading end of the tunnel furnace. The automatic loading robot is configured to grip the workpiece from the workstation loading device and place the workpiece at the workpiece placement part. The hot-forming apparatus is located between the gantry manipulator and the medium supply and recovery device, and the gantry manipulator is configured to move the workpiece from the in-furnace gripping zone to the hot-forming apparatus.

In another aspect, the gantry manipulator includes a first support column, a second support column, a transverse support member, a gripping mechanism, and a mechanism motion assembly. The first support column and the second support column are respectively arranged at two ends of the transverse support member, and the gripping mechanism is suspended from the bottom of the mechanism motion assembly by a fourth-axis connecting mechanism. The gripping mechanism includes a gripping frame, a gripping pneumatic cylinder, a gripping transmission rod, a transmission rod fixing sleeve, and a transmission lever. The gripping pneumatic cylinder is mounted on the gripping frame, and a pneumatic cylinder protective cover is provided at an outer side of the gripping pneumatic cylinder. The gripping transmission rod is slidably connected to the transmission rod fixing sleeve. One end of the gripping transmission rod is connected to the gripping pneumatic cylinder, and the other end of the gripping transmission rod is connected to the transmission lever. A first hook is provided at the bottom of the gripping frame, and a second hook is provided at the bottom of the transmission lever. When the workpiece is moved to the in-furnace gripping zone of the tunnel furnace, the first hook is configured to engage with one end of the workpiece, and the gripping pneumatic cylinder is configured to drive the gripping transmission rod to translate, so as to drive the transmission lever to swing, so that the transmission lever drives the second hook to swing to engage with the other end of the workpiece.

In another aspect, the mechanism motion assembly includes a mechanism motion support body and a fourth-axis servo motor, a motor protective cover, a harmonic reducer, a driving component, and a heat insulation board that are mounted on the mechanism motion support body. The motor protective cover covers the fourth-axis servo motor, the harmonic reducer is connected between the fourth-axis servo motor and the driving component, and the heat insulation board is mounted at an end of the driving component close to the gripping mechanism. The gripping mechanism is mounted on the driving component and is movable along with the driving component. A cooling component is further mounted on the mechanism motion support body and is configured to introduce cool air into the mechanism motion support body to cool the fourth-axis servo motor.

The hot-forming apparatus provided according to the present application includes: an apparatus frame; an upper slider and a lower slider, both mounted on the apparatus frame, where the upper slider is configured to drive the upper mold to move, and the lower slider is configured to support the lower mold; a transmission assembly mounted on the apparatus frame, where the transmission assembly includes a power component, a power conversion component connected to the power component, a torque transfer mechanism connected to the power conversion component, and a feedback encoder configured to obtain a rotation angle of the torque transfer mechanism, both the power conversion component and the torque transfer mechanism are gear-shaped, and the torque transfer mechanism is configured to drive the upper slider to move towards or away from the lower slider; and a controller, where both the power component and the feedback encoder are connected to the controller, the controller is configured to control operation of the power component based on the rotation angle of the torque transfer mechanism obtained by the feedback encoder. The hot-forming apparatus according to the present application utilizes gear transmission among the power component, the power conversion component, and the torque transfer mechanism to improve the positional movement precision of the upper slider, thereby effectively enhancing the positional precision of closing of the upper mold and the lower mold, and consequently improving the processing precision of workpieces. Furthermore, by providing the feedback encoder, which obtains the rotation angle of the torque transfer mechanism and feeds it back to the controller, a movement position of the slider can be better fed back, thereby further improving the positional precision of closing of the upper mold and the lower mold, and further enhancing the processing precision of workpieces.

In an embodiment, the hot-forming apparatus further includes a guiding mechanism mounted in the apparatus frame, and the upper slider is slidably connected to the guiding mechanism. The lower slider is slidably mounted in the apparatus frame and can slide from the interior to the exterior of the apparatus frame for mold replacement. In the above arrangement, the guiding mechanism may be a guide rail, such as a steel guide rail. The provision of the guiding mechanism can improve the movement smoothness of the upper slider during its lifting and lowering process, thereby further enhancing the positional movement precision of the upper slider and consequently improving the positional precision of the upper mold. Furthermore, since the lower slider can slide from the interior to the exterior of the apparatus frame, that is, the lower slider serves as a movable working table that can slide horizontally out of the apparatus frame for mold replacement, the convenience and timeliness of mold replacement are increased.

The hot-forming system according to the present application includes the aforementioned hot-forming apparatus. Since the hot-forming apparatus has the above-mentioned technical effects, the hot-forming system provided with the hot-forming apparatus also has corresponding technical effects.

### BRIEF DESCRIPTION OF THE DRAWINGS

In order to more clearly illustrating embodiments of the present application or technical solutions in the related art, the drawings used for describing the embodiments or the related art are briefly introduced below. Apparently, the drawings in the following description are only some embodiments of the present application. For those skilled in the art, other drawings can be obtained based on these drawings without any creative efforts.

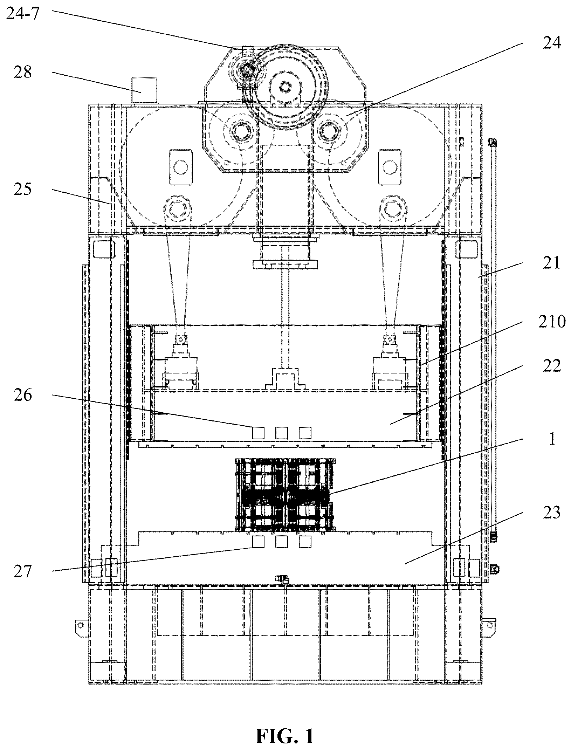

FIG. 1 is a schematic structural view of a hot-forming apparatus according to a specific embodiment of the present application;

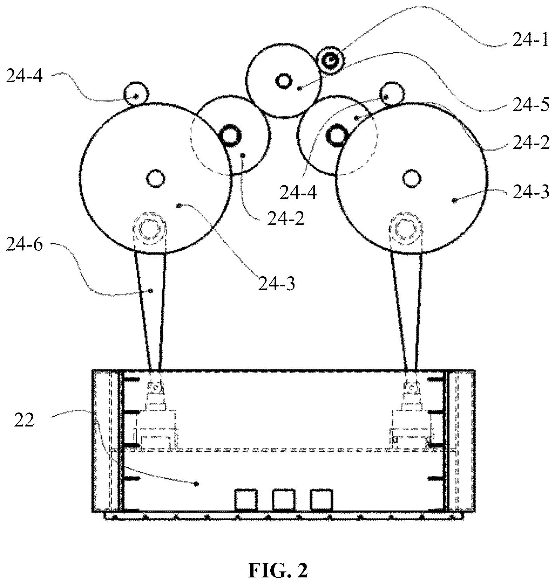

FIG. 2 is a transmission control mechanism diagram of the hot-forming apparatus shown in FIG. 1;

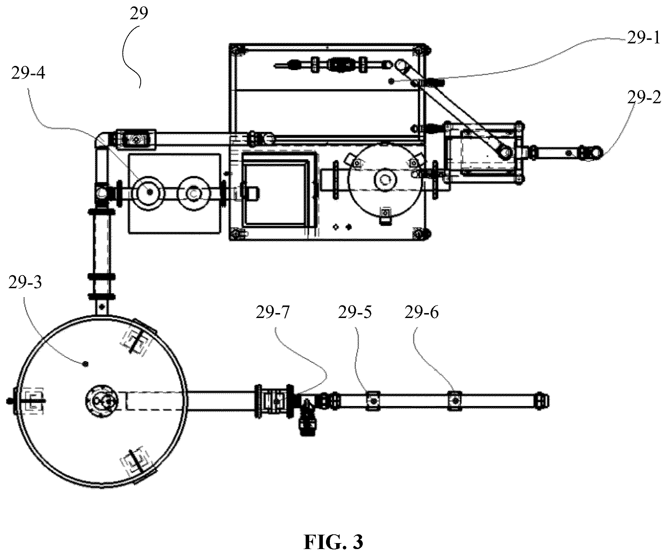

FIG. 3 is a structural view of a water circulation system of the hot-forming apparatus shown in FIG. 1;
FIG. 4 is a schematic structural view of a hot-forming mold of the hot-forming apparatus shown in FIG. 1;
FIG. 5 is a schematic structural view of support contact portions and hollow portions in an upper mold and a lower mold shown in FIG. 4;
FIG. 6 is a cross-sectional view of an injection member and a medium pipeline shown in FIG. 4;
FIG. 7 is a schematic structural view illustrating closing of the upper mold and the lower mold of the hot-forming mold shown in FIG. 4;
FIG. 8 shows an arrangement of the hot-forming mold according to an embodiment of the present application that can achieve differentiation between hot and cold zones;
FIG. 9 shows an arrangement of the hot-forming mold according to another embodiment of the present application that can achieve differentiation between hot and cold zones;
FIG. 10 is a schematic view illustrating an operating process of a hot-forming system according to a specific embodiment of the present application;
FIG. 11 is a schematic structural view of the hot-forming system according to a specific embodiment of the present application;
FIG. 12 is a cross-sectional view of a gantry manipulator of the hot-forming apparatus shown in FIG. 10;
FIG. 13 is a schematic structural view of a gripping mechanism of the gantry manipulator shown in FIG. 12; and
FIG. 14 is a schematic structural view of a mechanism motion assembly of the gantry manipulator shown in FIG. 12.

Reference numerals in the drawings are listed as follows:
1 hot-forming mold; 2 hot-forming apparatus; 3 hot-forming system; 4 workpiece;
11 upper mold; 12 lower mold; 13 hollow portion; 14 injection member; 15 medium pipeline; 16 upper mold connecting plate; 17 lower mold connecting plate; 18 upper connecting member; 19 lower connecting member; 110 support contact portion;
21 apparatus frame; 22 upper slider; 23 lower slider; 24 transmission assembly; 24-1 power component; 24-2 power conversion component; 24-3 torque transfer mechanism; 24-4 feedback encoder; 24-5 brake transmission component; 24-6 rotary connecting component; 24-7 balancing pneumatic cylinder; 25 upper mold water supply mounting adapter; 26 upper water channel port; 27 lower water channel port; 28 exhaust gas collection component; 29 water circulation system; 29-1 circulating water collection tank; 29-2 water return component; 29-3 water storage tank component; 29-4 water supply component; 29-5 secondary filter; 29-6 tertiary filter; 29-7 high-pressure water pump; 29-8 water supply pipe; 210 guiding mechanism; 211 quenching apparatus protective cover; 212 mold mounting part;
31-1 workpiece placement part; 31-2 heating zone; 31-3 heat retention zone; 31-4 in-furnace gripping zone; 32 workstation loading device; 33 automatic loading robot; 34 gantry manipulator; 34-1 first support column; 34-2 second support column; 34-3 transverse support member; 34-4 gripping mechanism; 34-4-1 gripping frame; 34-4-2 gripping pneumatic cylinder; 34-4-3 gripping transmission rod; 34-4-4 transmission rod fixing sleeve; 34-4-5 transmission lever; 34-4-6 pneumatic cylinder protective cover; 34-4-7 first hook; 34-4-8 second hook; 34-4-9 floating connector; 34-5 mechanism motion assembly; 34-5-1 fourth-axis servo motor; 34-5-2 motor protective cover; 34-5-3 harmonic reducer; 34-5-4 driving component; 34-5-5 heat insulation board; 34-5-6 cooling component; 34-5-7 bearing; 35 medium supply and recovery device.

### DETAILED DESCRIPTION OF THE EMBODIMENTS

A core of the present application is to provide a hot-forming apparatus and a hot-forming system that can enhance the positional precision of closing of an upper mold and a lower mold, thereby improving the processing precision of workpieces.

The technical solutions according to the embodiments of the present application will be described clearly and completely as follows in conjunction with the drawings in the embodiments of the present application. Apparently, the described embodiments are only some embodiments of the present application, rather than all the embodiments. All other embodiments obtained by those skilled in the art based on the embodiments of the present application without any creative work shall fall within the protection scope of the present application.

Hot-forming technology refers to a process in which steel plates are heated at high temperature until their microstructure becomes fully austenitized, and then the steel plates are cooled rapidly. This process comprehensively enhances the strength of the steel plates, increasing their yield strength to over 1000 MPa. For example, if this material is used in vehicle body components, the weight of the vehicle body can be reduced while the strength of the vehicle body can be improved, thereby achieving higher crash safety. Consequently, the hot-forming technology has become widely adopted in the automotive industry.

In the hot-forming process according to related technologies, die quenching is a critical step for achieving final properties, and the mold is a key factor in controlling the cooling process. The initial design of indirect hot-forming molds involves calculating the energy dissipated from the heated workpiece per unit time based on thermal conductivity parameters of water channels and the material, and determining the cooling rate to achieve the desired strength of the workpiece. However, die quenching presents several challenges. First, there are difficulties in precisely controlling the placement of the heated steel workpiece into the mold cavity, making control of the process harder. Second, the non-planar shape of the heated steel workpiece, which generally includes structures like corners, may cause inconsistent cooling rates, leading to uneven internal hardness and uncontrollable strength of the workpiece. Third, the water channels inside the mold do not directly contact the steel workpiece, resulting in slow cooling rates and low cooling efficiency. Fourth, the high cost of the hot-forming molds makes them unaffordable for general companies, which significantly limits the widespread adoption of indirect hot-forming.

In this embodiment, referring to 1 to 3, the hot-forming apparatus 2 includes:
an apparatus frame 21;
an upper slider 22 and a lower slider 23, both mounted on the apparatus frame 21, where the upper slider 22 is configured to drive an upper mold 11 to move, and the lower slider 23 is configured to support a lower mold 12;
a transmission assembly 24, mounted on the apparatus frame 21, where the transmission assembly 24 includes a power component 24-1, a power conversion component 24-2 connected to the power component 24-1, a torque transfer mechanism 24-3 connected to the power conversion component 24-2, and a feedback encoder 24-4 configured to obtain a rotation angle of the torque transfer mechanism 24-3, both the power conversion component 24-2 and the torque transfer mechanism 24-3 are gear-shaped, and the torque transfer mechanism 24-3 is configured to drive the upper slider 22 to move towards or away from the lower slider 23; and
a controller, connected to both the power component 24-1 and the feedback encoder 24-4, where the controller is configured to control operation of the power component 24-1 based on the rotation angle of the torque transfer mechanism 24-3 obtained by the feedback encoder 24-4.

Specifically, the torque transfer mechanism 24-3 rotates to drive the upper slider 22 to move in a vertical direction, enabling mold opening and closing of the entire apparatus. The power component 24-1 provides power support for pressing downward, positioning, and lifting operations of the upper slider 22. The power component 24-1 can adjust the torque of the apparatus based on actual needs, thereby controlling the pressure of the apparatus within a tonnage range of 1 to 600 T (tons), which is adjustable. The power component 24-1 can cooperate with and feed a signal to the torque transfer mechanism 24-3, forming a closed-loop control of a transmission position to achieve precise position control, with a repeat positioning precision of ± 0.03 mm. By adopting power conversion components 24-2 and torque transfer mechanisms 24-3 with different specifications, a transmission ratio between the power conversion components 24-2 and the torque transfer mechanism 24-3 may range from 1 to 100 to meet different usage requirements.

The hot-forming apparatus 2 utilizes gear transmission among the power component 24-1, the power conversion component 24-2, and the torque transfer mechanism 24-3 to improve the positional movement precision of the upper slider 22, thereby effectively enhancing the positional precision of closing of the upper mold 11 and the lower mold 12, and further improving the processing precision of a workpiece 4. Furthermore, by providing the feedback encoder 24-4, the rotation angle of the torque transfer mechanism 24-3 is obtained and fed back to the controller, enabling better feedback on the movement position of the upper slider 22, which also improves the positional precision of closing of the upper mold 11 and the lower mold 12, and further increases the processing precision of the workpiece 4.

In some embodiments, the transmission assembly 24 further includes a brake transmission component 24-5, which is configured to transmit power from the power component 24-1 to the power conversion component 24-2. The brake transmission component 24-5 is connected between the power component 24-1 and the power conversion component 24-2 and is also connected to the controller. The controller is further configured to control the brake transmission component 24-5 to stop once the upper slider 22 moves to a target position. The brake transmission component 24-5 is also a transmission gear, which is connected to the power component 24-1 and is engaged with the power conversion component 24-2 to transmit the actions of the power component 24-1 to the power conversion component 24-2. The brake transmission component 24-5 can protect the power component 24-1, improve the positioning precision, and ensure the positioning stability of the overall apparatus.

In some embodiments, the transmission assembly 24 further includes a rotary connecting component 24-6. One end of the rotary connecting component 24-6 is hinged to the torque transfer mechanism 24-3, and the other end is hinged to the upper slider 22. The torque transfer mechanism 24-3 drives the upper slider 22 to move up and down through the rotary connecting component 24-6, ensuring the upper slider 22 to move smoothly in the vertical direction. The transmission assembly 24 serves as the power source of the apparatus and the mechanical part of the closed-loop position control system of the entire apparatus.

In some embodiments, there are at least two power conversion components 24-2, at least two torque transfer mechanisms 24-3, and at least two rotary connecting components 24-6, which are symmetrically distributed on both sides of the brake transmission component 24-5. At least one of the rotary connecting components 24-6 is connected to a left side of the upper slider 22, and at least another one of the rotary connecting components 24-6 is connected to a right side of the upper slider 22. This arrangement ensures synchronous movement of the two sides of the upper slider 22, resulting in better positional precision.

In some embodiments, the transmission assembly 24 further includes a balancing pneumatic cylinder 24-7, which is configured to balance the physical weight of the upper slider 22 and the upper mold 11, so as to reduce the torque and power of the power component 24-1 to save energy. The mold opening and closing speed of the apparatus may reach a maximum of 2 m/s and may range from 0.1 m/s to 2 m/s, with the speed being adjustable. A stroke of the upper mold 11 may range from 0 to 4 m, and a mold opening distance may range from 0 to 3 m and is adjustable. Due to the high control precision of the apparatus, a size of a working surface of the lower module may reach 3500 mm by 5000 mm to meet the processing requirements of small-tonnage, large-sized workpieces 4.

In some embodiments, an upper part of the lower slide 23 is provided with a working surface. The working surface is provided with multiple positioning slots for positioning the lower mold 12 and multiple fixing slots for securing the lower mold 12. The positioning slots and the fixing slots are both arranged in array patterns. Specifically, the working surface of the lower slide 23 has cross-shaped positioning slots for mold replacement and mold positioning. When using hot-forming molds 1 that are of the same model, positioning blocks may be mounted in the positioning slots to eliminate the need for repeated positioning, thereby improving mold mounting efficiency. The fixing slots are T-shaped and may be used to connect and secure the lower mold 12 of the hot-forming mold 1, ensuring the position of the lower mold 12 to be stable.

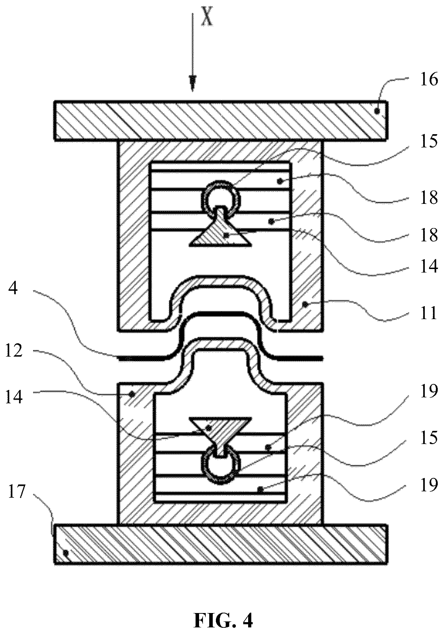

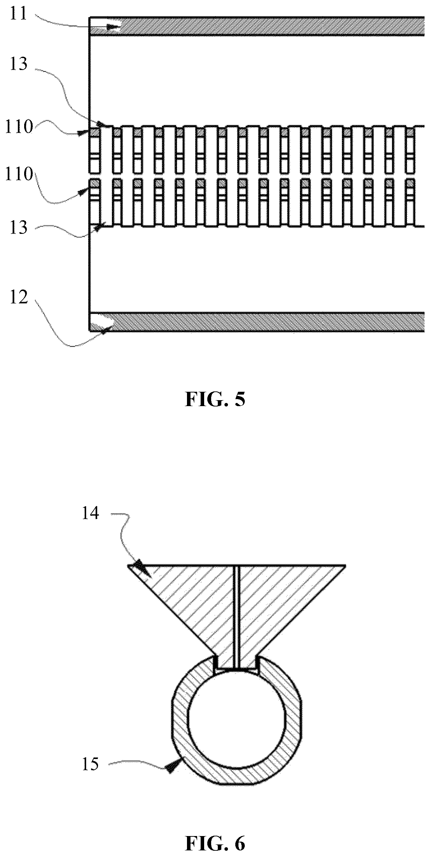

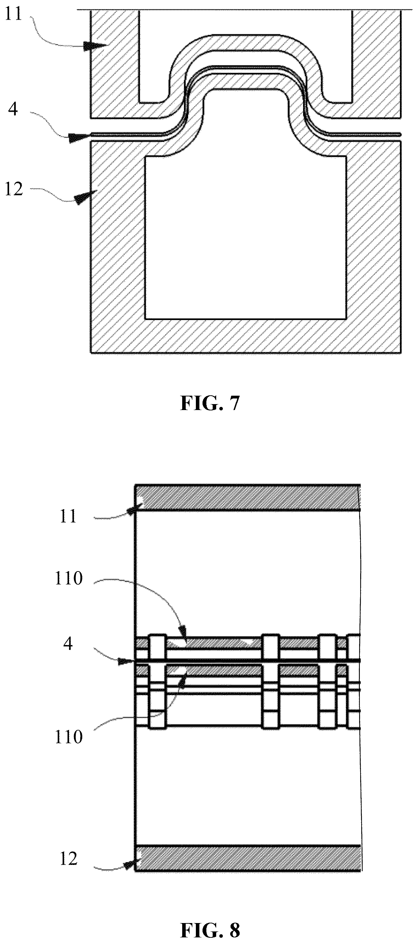

In some embodiments, with reference to FIGS. 4 to 9, the hot-forming apparatus further includes a hot-forming mold 1, which includes an upper mold 11, a lower mold 12, multiple injection members 14, and multiple medium pipelines 15. A profile cavity for accommodating the workpiece 4 is formed between the upper mold 11 and the lower mold 12. Each of the upper mold 11 and the lower mold 12 has a cavity inside. Moreover, hollow portions 13 are provided at targeted positions on a side, which is close to the profile cavity, of each of the upper mold 11 and the lower mold 12. The hollow portions 13 are connected to the cavity, allowing medium in the cavity to be injected onto the workpiece 4 through the hollow portions 13. The injection members 14 are mounted in the cavity of the upper mold 11 and/or the lower mold 12. The medium pipelines 15 are provided in the cavities. The medium pipelines 15 are configured to supply the medium to the injection members 14, and the pressure in each medium pipeline 15 is adjustable. Specifically, the hot-forming mold 1 is suitable for most hot-forming materials in the automotive industry, such as high-corrosion-resistant steel plates used in hot-forming processes and having single-metal or composite coatings including hot-dip galvanized coating, hot-dip zinc-nickel coating, hot-dip zinc-iron alloy coating, electro-galvanized coating, electroplated zinc-nickel coating, hot-dip aluminum-zinc coating, and hot-dip aluminum-silicon coating. Products produced by this mold exhibit excellent mechanical and corrosion-resistant properties during application and are suitable for components such as front and rear bumpers, longitudinal load-bearing beams, roof side rails, door panel reinforcements, transverse support beams, floor tunnels, suspension mounts, A/B pillars, side sill safety structural parts, and battery pack enclosures in both conventional fuel vehicles and new energy vehicles.

The specific shape and dimensions of the workpiece 4 can be formed through the profile cavity structure between the upper mold 11 and the lower mold 12 of the hot-forming mold 1. To meet the requirement for differentiation between soft and hard zones of the workpiece 4, cavities are provided inside both the upper mold 11 and the lower mold 12 in the present application, and hollow portions 13 are provided on the sides of the upper mold 11 and the lower mold 12 that are close to the profile cavity. The hollow portions 13 should be located at targeted positions on the upper mold 11 and the lower mold 12, and the target positions are determined based on the need for creating soft and hard zones of the workpiece 4. Specifically, the hard zone of the workpiece 4 requires relatively high cooling rate, so the hollow portions 13 can be placed at positions corresponding to the hard zone. By arranging the medium pipelines 15 in the cavities, with the injection members 14 (i.e., nozzles) distributed on the medium pipelines 15, the medium in the medium pipelines 15 can be injected onto the workpiece 4 through the injection members 14 to ensure an increased cooling rate in the hard zone of the workpiece 4. For the soft zone of the workpiece 4, there is no need to provide hollow portions 13, so as to reduce the cooling rate of the workpiece 4. More specifically, the number and size of the hollow portions 13 may be increased accordingly at positions corresponding to the hard zone of the workpiece 4 to increase the contact area between the medium and the workpiece 4, thereby enhancing the cooling rate at these positions of the workpiece 4. Further, a direction of the medium pipelines 15 is adapted to the shape of the workpiece 4, and medium pressure in the same medium pipeline 15 is uniform. For example, a pressure in the medium pipeline 15 corresponding to the hard zone of the workpiece 4 may be higher than that in the medium pipeline 15 corresponding to the soft zone of the workpiece 4. Alternatively, different temperature control in the soft and hard zones may be achieved by providing different types of medium or different medium temperatures in different medium pipelines 15, thereby improving the forming precision and efficiency of the workpiece 4, effectively eliminating quenching deformation of the workpiece 4, ensuring good welding performance, and preventing surface oxidation of the workpiece 4. The hot-forming mold can meet the hot-forming processing requirements for soft-hard zoning or full-hard zones, and also features precise forming, good welding performance, effective elimination of quenching deformation, and resistance to surface oxidation of the quenched workpiece 4.

In some embodiments, the pressures in at least two of the medium pipelines 15 are different. A higher pressure results in a faster cooling rate of the workpiece 4. Different pressures can be applied to the soft and hard zones to meet various requirements. In some embodiments, the temperatures of the medium in at least two of the medium pipelines 15 are different. A lower medium temperature leads to a faster cooling rate of the workpiece 4. Different temperatures can be applied to the soft and hard zones to meet various requirements. In some embodiments, the types of medium in at least two of the medium pipelines 15 are different. Options for medium selection include liquid water, compressed air, or a gas-liquid mixture. By introducing different types of medium into the medium pipelines 15, various cooling requirements can be met.

In some embodiments, the hot-forming apparatus further includes an upper mold connecting plate 16 and a lower mold connecting plate 17. The upper mold 11 is mounted to the upper mold connecting plate 16 and moves along with the upper mold connecting plate 16, and the lower mold 12 is mounted to the lower mold connecting plate 17 and moves along with the lower mold connecting plate 17. Further, the upper mold connecting plate 16 and the lower mold connecting plate 17 are respectively mounted to the upper slider 22 and the lower slider 23 of the hot-forming apparatus 2. The upper slider 22 and the lower slider 23 moves close to or away from each other, which enables the upper mold connecting plate 16 and the lower mold connecting plate 17 to move close to or away from each other, thereby performing closing and opening of the upper mold 11 and the lower mold 12.

In some embodiments, the positions of the hollow portions 13 correspond to the hard zone of the workpiece 4. Since the medium is in direct contact with the workpiece 4 at the hollow portions 13, the workpiece 4 can be rapidly cooled by the medium through the hollow portions 13, resulting in higher hardness of the workpiece 4 in this area. Further, to enhance the effect of the injection members 14 on the workpiece 4, mounting positions of the injection members 14 correspond to the positions of the hollow portions 13. Certainly, the positions of the injection members 14 may be adjusted based on actual needs or based on the size and shape of the cavities. The cooling rate of the workpiece 4 is mainly adjusted by the position and size of the hollow portions 13, as well as the pressure, temperature, and type of the medium.

In some embodiments, each hollow portion 13 is located between adjacent support contact portions 110. The support contact portions 110 and the hollow portions 13 are arranged alternately. This alternating arrangement facilitates processing and improves the positional constraint on the workpiece 4. Moreover, the hollow portions 13 may be arranged more densely at positions corresponding to the hard zone of the workpiece 4. The support contact portions 110 are in the shape of elastic strips. Specifically, the support contact portions 110 adopt strip-shaped structures, leaving a certain amount of elastic allowance, which can adapt to the workpiece 4 during the entire quenching process, during which the workpiece 4 heated to a temperature above Ac3 (upper critical temperature) is cooled to a preset temperature or below to finish the transformation from austenite to martensite. The preset temperature may range from 0 to 400°C. Since the workpiece 4 undergoes significant deformation during the entire quenching process, the strip-shaped structure applies a certain degree of constraint on the shape change of the workpiece 4, which is beneficial to hot-forming of the workpiece 4 and improves the forming precision of the workpiece 4.

In some embodiments, a width of each support contact portion 110 ranges from 3 mm to 50 mm. The width of the support contact portion 110 should not be too small to provide adequate support for the workpiece 4, nor should it be too large, as this would impair the cooling performance. The width of each hollow portion 13 ranges from 3 mm to 90 mm. The width of the hollow portion 13 should not be too small, as this would impair the cooling efficiency, nor should it be too large, as this would affect the width of the support contact portion 110, causing its failure to provide proper support for the workpiece 4. And/or, a distance between the injection members 14 and the workpiece 4 ranges from 120 mm to 600 mm. The distance between the injection members 14 and the workpiece 4 refers to a spacing between the injection members 14 and the workpiece 4 after the upper mold 11 and the lower mold 12 are closed. This distance between the injection member 14 and the workpiece 4 affects the injection rate and flow rate of the medium and can be adjusted as needed. The injection shape of the injection member 14 is conical, with a cone angle being 125 degrees or less. This configuration ensures better injection of the medium onto the workpiece 4, improving the cooling rate of the workpiece 4. Further, a width of the transition zone between the soft and hard zones ranges from 3 mm to 60 mm, providing a wide range of applicability. The support contact portion 110 is made of stainless steel and/or has a wear-resistant coating on its surface to enhance its service life.

In some embodiments, the hot-forming apparatus further includes connecting members configured to mount the medium pipelines 15 in the cavities. The positions of the connecting members are adjustable to change the positions and angles of the medium pipelines 15 in the cavities. Specifically, the connecting members include two upper connecting members 18 and two lower connecting members 19. The medium pipeline 15 in the upper mold 11 is mounted between the two upper connecting members 18, and the medium pipeline 15 in the lower mold 12 is mounted between the two lower connecting members 19. The mounting height of the medium pipeline 15 in the upper mold 11 can be adjusted via the upper connecting members 18, and the mounting height of the medium pipeline 15 in the lower mold 12 can be adjusted via the lower connecting members 19, thereby changing the distance between the injection members 14 and the workpiece 4.

In some embodiments, the hot-forming apparatus further includes multiple pressure intensifiers and a controller connected to the pressure intensifiers. The number of medium pipelines 15 is equal to the number of the pressure intensifiers, and the medium pipelines 15 are in one-to-one correspondence to the pressure intensifiers. The controller is configured to obtain the positions of the soft and hard zones of the workpiece 4 and determine a target pressure required for each of the medium pipelines 15 based on the positions of the soft and hard zones of the workpiece 4. The controller is also configured to control operation of the pressure intensifiers based on the target pressure. With this configuration, the controller controls the pressure intensifiers, thereby regulating the pressure in each medium pipeline 15 to meet the injection pressure requirement of the injection member 14 on each medium pipeline 15. Since the medium pipelines 15 are in one-to-one correspondence to the pressure intensifiers, automotive control can be achieved solely by adjusting the pressure applied by each pressure intensifier based on the obtained distribution positions of the soft and hard zones in the workpiece 4. This improves the level of automation, reduces human interference, and maximizes the precision and efficiency of hot-forming of the workpiece 4, thereby improving product quality.

In some embodiments, the hot-forming apparatus further includes an upper mold water supply mounting adapter 25.

The upper mold water supply mounting adapter 25 is configured to connect to an external pipeline. The upper mold water supply mounting adapter 25 is mounted on the apparatus frame 21, and the upper mold 11 is provided with a quick-release connector that is detachably connected to the upper mold water supply mounting adapter 25. The quick-release connector is communicated with the medium pipeline 15. Specifically, the upper mold water supply mounting adapter 25 may be directly integrated with the apparatus frame 21 or attached to the apparatus frame 21 via bolts. The external pipeline supplies the cooling medium to the upper mold water supply mounting adapter 25 through flexible or rigid connections. The upper mold 11 of the hot-forming mold 1 is provided with a quick-release connector, and a flexible or rigid pipe may be connected between the upper mold 11 and the upper mold water supply mounting adapter 25 to supply the cooling medium. Certainly, a lower mold water supply mounting adapter may also be provided to connect to an external pipeline. The lower mold water supply mounting adapter is mounted on the apparatus frame 21, and the lower mold 12 is provided with a quick-release connector that is detachably connected to the lower mold water supply mounting adapter. The quick-release connector is communicated with the medium pipeline 15. Specifically, the lower mold water supply mounting adapter may be directly integrated with the apparatus frame 21 or attached to the apparatus frame 21 via bolts. The external pipeline supplies the cooling medium to the lower mold water supply mounting adapter through flexible or rigid connections. The lower mold 12 of the hot-forming mold 1 is provided with a quick-release connector, and a flexible or rigid pipe may be connected between the lower mold 12 and the lower mold water supply mounting adapter to supply the cooling medium. Further, the upper mold water supply mounting adapter 25 and the lower mold water supply mounting adapter are compatible with both high and low pressures ranging from 0.1 MPa to 30 MPa, thereby meeting different operational requirements.

In some embodiments, the hot-forming apparatus further includes an upper water channel port 26 and a lower water channel port 27. The upper water channel port 26 is mounted on the upper slider 22, and the lower water channel port 27 is mounted on the lower slider 23. The upper water channel port 26 is communicated with the quick-release connector and connected to the upper mold water supply mounting adapter 25 via a flexible or rigid pipe, thereby delivering the medium to the upper mold 11 and facilitating the quenching process.

In some embodiments, the hot-forming apparatus further includes an exhaust gas collection component 28 and a water circulation system 29.

The exhaust gas collection component 28 is configured to collect exhaust gas generated during the quenching process, and is mounted at a top portion of the apparatus frame 21.

The water circulation system 29 is configured to collect and recirculate the medium. The water circulation system 29 includes: a circulating water collection tank 29-1 configured to store cooling water collected from the hot-forming mold 1 and perform primary filtration on the cooling water; a water return component 29-2 configured to pump the cooling water from the hot-forming mold 1 into the circulating water collection tank 29-1 and connected to the circulating water collection tank 29-1; a water storage tank component 29-3 configured to store primarily filtered circulating water coming from the circulating water collection tank 29-1, where the water storage tank component 29-3 can stabilize water pressure and volume, ensuring smooth and steady water supply for the quenching apparatus; a water supply component 29-4 configured to obtain the primarily filtered circulating water from the circulating water collection tank 29-1 and deliver it to the water storage tank component 29-3, where the water storage tank component 29-3 is connected with a water supply channel configured to deliver the cooling water to the hot-forming mold 1; a secondary filter 29-5 and/or a tertiary filter 29-6 mounted on the water supply channel and configured to perform secondary and/or tertiary filtration on the cooling water in the water supply channel, where the secondary filter 29-5 filters the water in the water supply channel, and the tertiary filter 29-6 filters the water once more to ensure the cleanliness of the water used in the apparatus; and a high-pressure water pump 29-7 mounted on the water supply pipe 29-8 and configured to regulate water supply pressure in the water supply channel within an adjustable range of 0 to 3 MPa.

In some embodiments, the hot-forming apparatus further includes a guiding mechanism 210 mounted in the apparatus frame 21, and the upper slider 22 is slidably connected to the guiding mechanism 210. The lower slider 23 is slidably mounted in the apparatus frame 21 and can slide from inside to outside of the apparatus frame for mold replacement. In the above arrangement, the guiding mechanism 210 may be a guide rail, such as a steel guide rail. The provision of the guiding mechanism 210 enhances the smoothness of the vertical movement of the upper slider 22, thereby improving its positional precision during movement. Consequently, the positional precision of the upper mold 11 can be increased. Further, the lower slider 23, functioning as a movable working table, can slide out of the apparatus frame 21, that is, it can move leftward or rightward to get out of the apparatus frame 21 for mold replacement, enhancing convenience and efficiency of mold replacement.

In some embodiments, the bottom of the apparatus frame 21 is further provided with an apparatus base. The apparatus frame 21 is mounted on the apparatus base. This provides better support for the apparatus frame 21, ensuring its stability, thereby guaranteeing the smooth movement of the upper mold 11 and the lower mold 12.

In some embodiments, a quenching apparatus protective cover 211 is also mounted on the apparatus frame 21 to protect against splashing of the medium during the quenching process. Additionally, a mold mounting part 212 is mounted on the apparatus frame 21, and the hot-forming mold 1 can be mounted and replaced through the mold mounting part 212.

In a specific embodiment, the hot-forming apparatus 2 includes an apparatus frame 21 and an apparatus base. The apparatus frame 21 consists of two parts. One of the two parts is mounted on the apparatus base, and the other one supports the transmission assembly 24. The two parts of the apparatus frame and the apparatus base constitute the main frame of the apparatus, offering mounting and supporting for all mechanisms and providing mounting positions for standard components. The power component 24-1 provides power for vertical movement and positioning of the apparatus. The brake transmission component 24-5 is configured to transmit the power from the power component 24-1 and perform braking when positioning is required. The power conversion component 24-2 is used to expand the dimensions of the power transmission system, ensuring uniform force distribution across the entire working surface. The torque transmission mechanism 24-3 is used to expand the force-bearing space of the apparatus and increase its pressing capacity. The guiding mechanism 210 is configured to allow the upper slider 22 to move smoothly in the vertical direction. The upper slider 22 is provided with mounting slots and mounting plates configured to mount the upper mold 11. The hot-forming mold 1 can help to create differentiated cold and hot zones, and is designed for on the entire quenching process of hot-formed parts. The lower slider 23 is provided with mounting slots and mounting plates for mounting and fixation of the lower mold 12. The balancing pneumatic cylinder 24-7 is configured to balance the mounting slots and mounting plates of the upper slider 22, as well as the physical weight of the upper mold 11, thereby reducing the torque and power requirements on the power system and saving energy. The exhaust gas collection device is configured to collect exhaust gas generated during the hot-forming quenching process for centralized recycling and treatment, and has a flow rate capable of replacing the air inside the apparatus every 10 seconds. The upper water channel port 26 is connected to the upper mold 11 of the soft-hard zoning hot-forming mold 1, providing the upper mold 11 with medium for the quenching operation. The lower water channel port 27 is connected to the lower mold 12 of the cold-hot zoning hot-forming mold 1, providing the lower mold 12 with medium for the quenching operation. The above configuration reduces the power consumption of the apparatus, improves its efficiency, and minimizes its footprint.

A hot stamping process utilizing the hot-forming apparatus 2 includes the following steps.

Step S1 includes cutting of galvanized steel sheets. In this step, steel material is processed into coil or sheet material and cut into the required dimensions. This step is also applicable to cutting of Al-Si steel sheets.

Step S2 includes cold stamping. In this step, a steel workpiece 4 is formed by cold stamping using a die.

Step S3 includes heating. In this step, the steel workpiece 4 is heated to above Ac3. If a surface of the steel material in Step S1 is uncoated, in Step S3, the steel workpiece 4 is first heated to above 700°C at a rate of 12°C/s to 28°C/s, then heated to above Ac3 at a rate of 1°C/s to 5°C/s and held at this temperature for 28 to 55 seconds. If the steel material in Step S1 has undergone surface treatment by any of Zn coating, Al coating, Al-Si coating, or high-temperature oxidizer coating, in Step S3, the steel workpiece 4 is heated to 500°C at a rate of 8°C/s to 15°C/s, then heated to a temperature between 560°C and 980°C at a rate of 15 to 30°C/s, and then heated to above Ac3 at a rate of 1 to 5°C/s and held at this temperature for 28 to 55 seconds.

Step S4 includes transferring the workpiece 4 to the hot-forming apparatus 2 which provides soft-hard zoning and full-area hardening functions.

Step S5 includes moving the upper slider 22 to close the upper and lower molds of the hot-forming mold 1.

Step S6 includes activating the high-pressure water pump 29-7 and the pressure intensifiers to supply water to the medium pipelines 15. In this step, under pressure, the multiple injection members 14 sprays the medium to quench the workpiece 4. Simultaneously, the exhaust gas collection device at the top portion of the apparatus is also activated to collect exhaust gas.

Step S7 includes deactivating the pressure intensifiers after quenching is complete, and deactivating the exhaust gas collection device simultaneously.

Step S8 includes moving the upper slider 22 to open the mold until mole opening operation is complete.

Throughout this process, the mold is closed and opened by moving the upper slider 22, and thus the apparatus can vertically press and release the workpiece 4, and can also clamp the workpiece 4 to be formed. The pressure intensifiers are activated after the workpiece 4 is clamped, and activating the pressure intensifiers enables the injection members 14 to spray medium for quenching. The pressure intensifiers are turned off after the mold opening operation is finished. The exhaust gas collection device is activated after the mold closing operation is complete and stops after the mold opening operation is complete. The water circulation system 29 starts synchronously with the mold closing operation of the apparatus and stops synchronously when quenching is complete.

In addition to the aforementioned hot-forming apparatus 2, a hot-forming system 3 is further provided according to the present application, including the above-mentioned hot-forming apparatus 2.

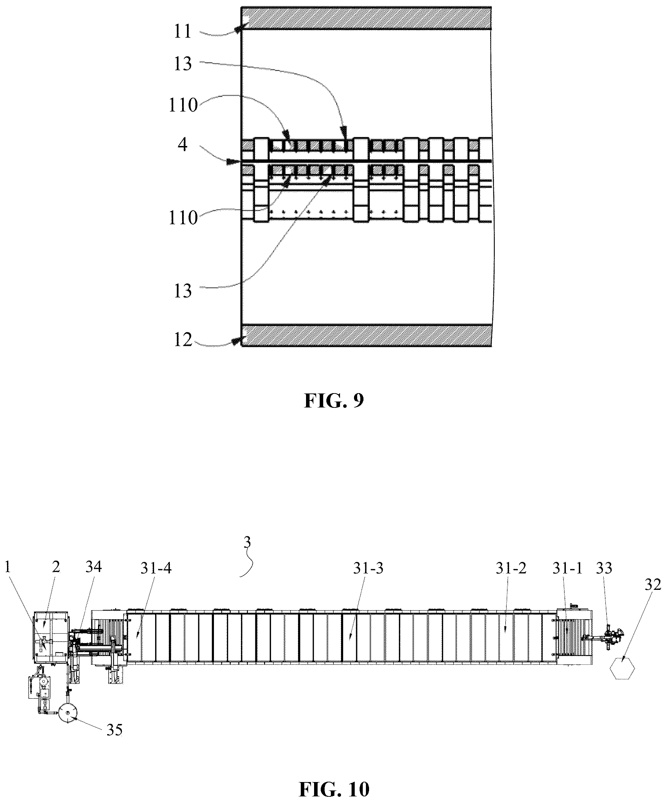

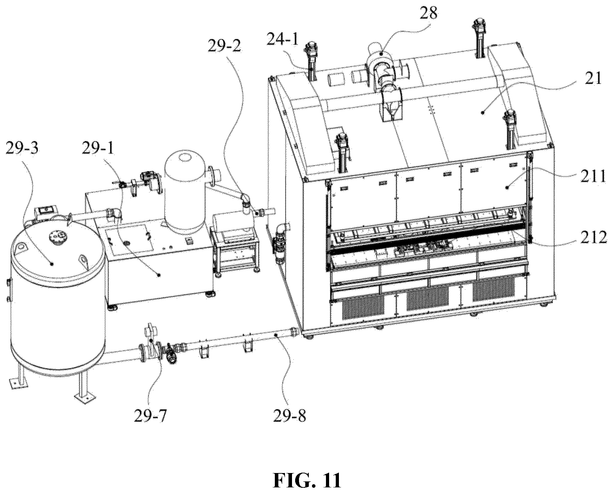

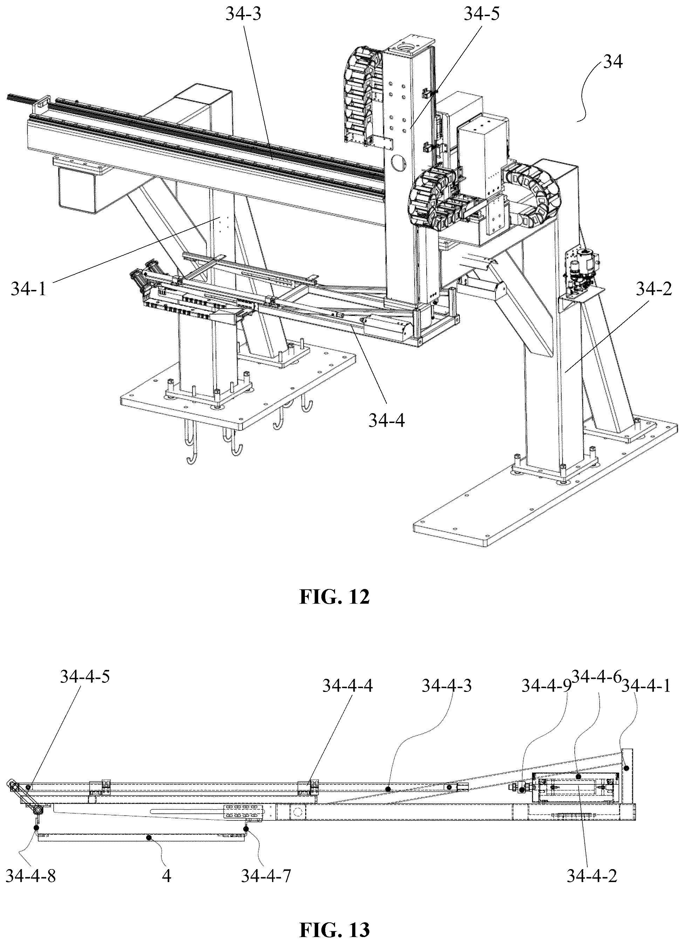

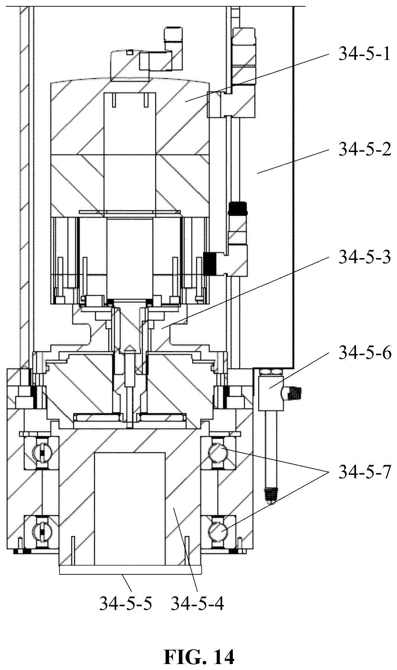

In some embodiments, referring to FIGS. 10 to 14, the system further includes a tunnel furnace, which is provided with a workpiece placement part 31-1, a heating zone 31-2, a heat retention zone 31-3, and an in-furnace gripping zone 31-4 that are arranged sequentially from a loading end to an unloading end of the tunnel furnace. The system further includes a workstation loading device 32 and an automatic loading robot 33. The automatic loading robot 33 is configured to grip the workpiece 4 from the workstation loading device 32 and place it at the workpiece placement part 31-1. The system further includes a gantry manipulator 34 and a medium supply and recovery device 35. The hot-forming apparatus 2 is located between the gantry manipulator 34 and the medium supply and recovery device 35. The gantry manipulator 34 is configured to move the workpiece 4 from the in-furnace gripping zone 31-4 to the hot-forming apparatus 2. Specifically, the workstation loading device 32 may be a six-station loading device 32 for manual loading, with one active loading station and five standby stations. Each of the stations can accommodate one to four workpieces 4. Loading is carried out by the automatic loading robot 33, which is configured to automatically grip the workpiece 4 from the six-station loading device 32 and load the workpiece 4. The automatic loading robot 33 works in cooperation with the gantry manipulator 34 to perform end-to-end gripping and placement of the workpiece 4. The workpiece placement part 31-1 serves as an out-of-furnace placement area for the workpiece 4 gripped by the automatic loading robot 33. In the heating zone 31-2, the tunnel furnace can simultaneously heat both upper and lower surfaces of the workpiece 4. The heat retention zone 31-3 can convey the workpiece 4 while maintaining the temperature of the heated workpiece 4. The in-furnace gripping zone 31-4 allows for precise positioning and gripping of the heated workpiece 4. The gantry manipulator 34 is used to position and grip the workpiece 4 that is heated and kept at its temperature, and place it into the hot-forming mold 1. The hot-forming apparatus 2 performs quenching on the heated workpiece 4 to achieve the preset mechanical properties. The medium supply and recovery device 35 is configured to filter, pressurize, and transport the cooling medium for recycling. The hot-forming mold 1 is used to quench the workpiece 4 placed inside the hot-forming apparatus 2.

Alternatively, the tunnel furnace may be replaced with a box furnace. The hot-forming mold 1 is located inside the box furnace, and the workpiece 4 is placed into the box furnace to undergo the entire process, during which the position of the workpiece 4 remains unchanged in the box furnace.

In some embodiments, the gantry manipulator 34 includes a first support column 34-1, a second support column 34-2, a transverse support member 34-3, a gripping mechanism 34-4, and a mechanism motion assembly 34-5. The first support column 34-1 and the second support column 34-2 are positioned at two ends of the transverse support member 34-3 respectively. The gripping mechanism 34-4 is suspended from the bottom of the mechanism motion assembly 34-5 via a fourth-axis connection mechanism. Further, a floating connector 34-4-9 is provided at an end of a gripping pneumatic cylinder 34-4-2, and is hinged to an end of a gripping transmission rod 34-4-3. The accompanying drawings shows the structure when the floating connector 34-4-9 is not connected to the gripping transmission rod 34-4-3. Specifically, the first support column 34-1 and the second support column 34-2 are used to support the gripping mechanism 34-4. A first hook 34-4-7 and s second hook 34-4-8 are located at a gripping end of the gripping mechanism 34-4, and the gripping pneumatic cylinder 34-4-2 enables leftward and rightward movements of the gripping end. The transverse support member 34-3 supports the transverse motion of the gantry manipulator 34. The gripping mechanism 34-4 may also move forward and backward, that is, it can move in three directions: up and down, left and right, and forward and backward. The first support column 34-1 and the second support column 34-2 together form a cantilever structure of the gantry manipulator 34, enhancing the flexibility and spatial adaptability of apparatus installation. A mounting base plate of the gantry manipulator 34 is used to secure the gantry manipulator 34, ensuring stable operation of the apparatus. The gripping mechanism 34-4 is configured to continuously grip the workpiece 4 from the furnace in high-temperature environments. The gripping frame 34-4-1 serves as the fourth-axis mechanism of the gantry manipulator 34, supporting the weight and overturning force of the hooks at the gripping end of the gripping mechanism 34-4.

In some embodiments, the gripping mechanism 34-4 includes a gripping frame 34-4-1, a gripping pneumatic cylinder 34-4-2, a gripping transmission rod 34-4-3, a transmission rod fixing sleeve 34-4-4, and a transmission lever 34-4-5. The gripping pneumatic cylinder 34-4-2 is mounted on the gripping frame 34-4-1, and a pneumatic cylinder protective cover 34-4-6 is arranged on an outer side of the gripping pneumatic cylinder 34-4-2. The gripping transmission rod 34-4-3 is slidably connected to the transmission rod fixing sleeve 34-4-4. One end of the gripping transmission rod 34-4-3 is connected to the gripping pneumatic cylinder 34-4-2, and the other end of the gripping transmission rod 34-4-3 is connected to the transmission lever 34-4-5. Furthermore, a bottom of the gripping frame 34-4-1 is provided with a first hook 34-4-7, and a bottom of the transmission lever 34-4-5 is provided with a second hook 34-4-8. When the workpiece 4 is moved to the in-furnace gripping zone 31-4 inside the tunnel furnace, one end of the workpiece 4 is moved into engagement with the first hook 34-4-7. The gripping pneumatic cylinder 34-4-2 drives the gripping transmission rod 34-4-3 to translate, thereby driving the transmission lever 34-4-5 to swing. The transmission lever 34-4-5 drives the second hook 34-4-8 to swing, so that the second hook 34-4-8 is engaged with the other end of the workpiece 4. Specifically, the gripping frame 34-4-1 is used to mount and support the overall mechanical structure of the gripping mechanism 34-4 and is made of high-temperature-resistant materials to enable continuous operation in high-temperature environments. The pneumatic cylinder protective cover 34-4-6 is used to block thermal radiation and ensure the durability of the transmission mechanism, i.e., the gripping pneumatic cylinder 34-4-2. The floating connector 34-4-9 is configured to connect the gripping pneumatic cylinder 34-4-2 and the gripping transmission rod 34-4-3. The gripping transmission rod 34-4-3 is used to transmit motions and operations of the entire mechanical mechanism, including clamping and transferring operations. The transmission rod fixing sleeve 34-4-4 is used to stabilize the forward and backward motion of the gripping transmission rod 34-4-3 during transmission. The transmission lever 34-4-5 is configured to clamp or rotate under the action of the gripping transmission rod 34-4-3 to grip the workpiece 4.

In some embodiments, the mechanism motion assembly 34-5 includes a mechanism motion support body, as well as a fourth-axis servo motor 34-5-1, a motor protective cover 34-5-2, a harmonic reducer 34-5-3, a driving component 34-5-4, and a heat insulation board 34-5-5 that are mounted on the mechanism motion support body. The motor protective cover 34-5-2 covers the fourth-axis servo motor 34-5-1, and the harmonic reducer 34-5-3 is connected between the fourth-axis servo motor 34-5-1 and the driving component 34-5-4. The heat insulation board 34-5-5 is mounted at an end of the driving component 34-5-4 close to the gripping mechanism 34-4. The gripping mechanism 34-4 is mounted on the driving component 34-5-4 and can move along with the driving component 34-5-4. The mechanism motion support body is further provided with a cooling component 34-5-6, which is used to introduce cool air into the mechanism motion support body to cool the fourth-axis servo motor 34-5-1. The fourth axis of the gantry manipulator 34 employs a servo motor combined with a harmonic reducer 34-5-3. Bearings 34-5-7, which may be double row angular contact bearings 34-5-7 or crossed roller bearings 34-5-7, are mounted between the driving component 34-5-4 and the mechanism motion support body. To counteract a lateral force applied by the gripping mechanism 34-4, the bearings are designed to withstand an axial load of 500 kg. To ensure the working lifespan of the bearings 34-5-7 in a thermal radiation environment, dual thermal protection using thermal insulation material and thermal insulation coating is employed, enabling continuous operation of the bearings in high-temperature thermal radiation environments. The heat insulation board 34-5-5 is used to block thermal conduction and isolate heat-radiating components.

The hot-forming system 3 adopts an in-furnace gripping solution, which reduces the air-cooling time of the hot-formed parts. The cycle time from gripping the workpiece 4 to placing it on the hot-forming mold 1 can be reduced to 11 seconds or below, which better ensures the microstructural changes in the components. Moreover, the quenching apparatus, the hot-forming mold 1, and the water cooling system operate according to an automated logic. In a first stage, the fluid cooling medium is blown and sprayed to come into direct contact with the surface of the steel workpiece 4 heated to above Ac3, so that the temperature of the workpiece 4 is reduced to between 250°C and 450°C within a controlled time of 3 seconds to 15 seconds. In a second stage, the fluid cooling medium is blown and sprayed to come into direct contact with the surface of the steel workpiece 4, reducing its temperature to below 180°C within a controlled time of 3 seconds to 10 seconds. Alternatively, the temperature of the surface of the steel workpiece 4 may be continuously reduced in a single stage. For example, the temperature of the surface of the steel workpiece 4 is reduced to below 100°C within a controlled time of 2 seconds to 30 seconds. The present process achieves quenching of the workpiece 4 through heat exchange. The quenching apparatus features both pressure and positioning dual-mode control, which can maintain the overall fit between the upper and lower molds. The pressure requirement is not stringent, and an overall tonnage ranging from 200 tons to 300 tons is acceptable. The gripping mechanism 34-4 of the gantry manipulator 34 is made of high-temperature-resistant materials, enabling continuous operation at temperatures up to 1000°C. The gripping frame 34-4-1 of the gantry manipulator 34 is provided with a high-temperature-resistant coating and has circulating cool air inside, allowing the gripping frame 34-4-1 to maintain mechanical properties and performance continuously in a thermal radiation environment of up to 1100°C and to continuously operate in this environment. The fourth axis of the gantry manipulator 34 employs a servo motor combined with a harmonic reducer 34-5-3. To counteract the lateral force of the gripping mechanism 34-4, a double row angular contact bearing 34-5-7 or a crossed roller bearing 34-5-7 is used, which is designed to have an axial load capacity of 500 kg. To ensure the working lifespan of the bearing 34-5-7 in a thermal radiation environment, dual thermal protection using thermal insulation material and thermal insulation coating is adopted, enabling continuous operation of the bearing in high-temperature thermal radiation environments. This hot-forming system 3 only requires manual loading at the six-station turntable loading area at the first workstation, with all other operations being fully automatic. The hot-forming system 3 features completely automated program control and can ensure fully automatic production of the production line.

Specifically, a hot stamping process carried out by the hot-forming system 3 includes the following steps.

Step S1 includes cutting of galvanized steel sheets. In this step, steel material is processed into coil or sheet material and cut into the required dimensions. This step is also applicable to cutting of Al-Si steel sheets.

Step S2 includes cold stamping. In this step, a steel workpiece 4 is formed by cold stamping using a die.

Step S3 includes heating. In this step, the steel workpiece 4 is heated to above Ac3. If a surface of the steel material in Step S1 is uncoated, in Step S3, the steel workpiece 4 is first heated to above 700°C at a rate of 12 to 28°C/s, then heated to above Ac3 at a rate of 1 to 5°C/s and held at this temperature for 28 to 55 seconds. If the steel material in Step S1 has undergone surface treatment by any of Zn coating, Al coating, Al-Si coating, or high-temperature oxidizer coating, in Step S3, the steel workpiece 4 is heated to 500°C at a rate of 8 to 15°C/s, then heated to a temperature between 560°C and 980°C at a rate of 15 to 30°C/s, and then heated to above Ac3 at a rate of 1 to 5°C/s and held at this temperature for 28 to 55 seconds.

Step S4 includes transferring the workpiece 4 to the hot-forming apparatus 2 through the gantry manipulator.

Step S5 includes moving the upper mold 11 assembly along an X direction to close the mold, so that the upper mold 11 assembly gradually comes into contact with the workpiece 4 and presses against the lower mold 12 assembly.

Step S6 includes activating the quenching apparatus in the hot-forming apparatus 2 for quenching. In this step, under pressure, the multiple injection members 14 spray the medium to quench the workpiece 4.

Step S7 includes deactivating the pressure intensifiers after quenching is complete.

Step S8 includes moving the upper mold 11 assembly in an opposite direction until mold opening operation is complete.

Step S9 includes picking up the quenched product by a robot and placing it in a shot peening and oiling apparatus for a next process.

This hot-forming system 3 enhances the controllability of steel quenching, simplifies the production process of the hot-forming process, reduces the power consumption of the hot-forming apparatus 2, improves apparatus efficiency, and minimizes the apparatus footprint.

The embodiments in the specification are described in a progressive manner, and each embodiment focuses on the difference from other embodiments. Same and similar parts in each embodiment may be referred to each other.

The hot-forming apparatus according to the present application is described in detail hereinbefore. The principle and implementation of the present application are illustrated using specific embodiments herein. The above descriptions of the embodiments are only used to facilitate understanding of the method and the core idea of the present application. It should be noted that, several improvements and modifications may be made by those skilled in the art to the present application without departing from the principle of the present application, and these improvements and modifications also fall within the protection scope of the present application.

## Claims

1. A hot-forming apparatus, comprising:
an apparatus frame (21);
an upper slider (22) and a lower slider (23), which are mounted on the apparatus frame (21), wherein the upper slider (22) is configured to drive an upper mold (11) to move, and the lower slider (23) is configured to support a lower mold (12);
a transmission assembly (24) mounted on the apparatus frame (21), wherein the transmission assembly (24) comprises a power component (24-1), a power conversion component (24-2) connected to the power component (24-1), a torque transfer mechanism (24-3) connected to the power conversion component (24-2), and a feedback encoder (24-4) configured to obtain a rotation angle of the torque transfer mechanism (24-3), both the power conversion component (24-2) and the torque transfer mechanism (24-3) are gear-shaped, and the torque transfer mechanism (24-3) is configured to drive the upper slider (22) to move towards or away from the lower slider (23); and
a controller, wherein both the power component (24-1) and the feedback encoder (24-4) are connected to the controller, and the controller is configured to control operation of the power component (24-1) based on the rotation angle of the torque transfer mechanism (24-3) obtained by the feedback encoder (24-4).

2. The hot-forming apparatus according to claim 1, wherein the transmission assembly (24) further comprises a brake transmission component (24-5) configured to transmit power from the power component (24-1) to the power conversion component (24-2), the brake transmission component (24-5) is connected between the power component (24-1) and the power conversion component (24-2) and is connected to the controller, and the controller is further configured to control the brake transmission component (24-5) to stop when the upper slider (22) moves to a target position.

3. The hot-forming apparatus according to claim 2, wherein
the transmission assembly (24) further comprises a rotary connecting component (24-6), one end of the rotary connecting component (24-6) is hinged to the torque transfer mechanism (24-3), the other end of the rotary connecting component (24-6) is hinged to the upper slider (22), and the torque transfer mechanism (24-3) is configured to drive the upper slider (22) to move up and down through the rotary connecting component (24-6);
the number of the power conversion component (24-2), the number of the torque transfer mechanism (24-3), and the number of the rotary connecting component (24-6) are all at least two, the at least two power conversion components (24-2) are symmetrically distributed on left and right sides of the brake transmission component (24-5), the at least two torque transfer mechanisms (24-3) are symmetrically distributed on the left and right sides of the brake transmission component (24-5), and the at least two rotary connecting components (24-6) are symmetrically distributed on the left and right sides of the brake transmission component (24-5); and
at least one of the rotary connecting component (24-6) is connected to a left side of the upper slider (22), and at least another one of the rotary connecting components (24-6) is connected to a right side of the upper slider (22).

4. The hot-forming apparatus according to claim 1, wherein a working surface is provided on an upper part of the lower slider (23), the working surface is provided with a plurality of positioning slots configured to position the lower mold (12) and a plurality of fixing slots configured to fix the lower mold (12), and the positioning slots and the fixing slots are arranged in arrays respectively.

5. The hot-forming apparatus according to claim 1, further comprising a hot-forming mold (1), wherein the hot-forming mold (1) comprises:
the upper mold (11) and the lower mold (12), wherein a profile cavity configured to accommodate a workpiece (4) is formed between the upper mold (11) and the lower mold (12), each of the upper mold (11) and the lower mold (12) has a cavity inside and is provided with hollow portions at target positions on one side thereof close to the profile cavity, and the hollow portions (13) are in communication with the cavity, allowing medium in the cavity to be injected onto the workpiece (4) through the hollow portions (13);
a plurality of injection members (14), which are mounted in the cavity of the upper mold (11) and/or the lower mold (12); and
a plurality of medium pipelines (15) arranged in the cavities, wherein the plurality of medium pipelines (15) are configured to supply the medium to the injection members (14), with pressure in each of the medium pipelines (15) being adjustable.

6. The hot-forming apparatus according to claim 5, further comprising an upper mold water supply mounting adapter (25) configured to connect to an external pipeline, wherein the upper mold water supply mounting adapter (25) is mounted on the apparatus frame (21), and the upper mold (11) is provided with a quick-release connector that is detachably connected to the upper mold water supply mounting adapter (25) and is in communication with the medium pipeline (15).

7. The hot-forming apparatus according to claim 1, further comprising:
an exhaust gas collection component (28) configured to collect exhaust gas during a quenching process, wherein the exhaust gas collection component (28) is mounted at a top portion of the apparatus frame (21); and
a water circulation system (29) configured to collect and recycle the medium, wherein
the water circulation system (29) comprises:
a circulating water collection tank (29-1) configured to store cooling water collected from the hot-forming mold (1) and perform primary filtration on the cooling water;
a water return component (29-2) configured to pump the cooling water from the hot-forming mold (1) into the circulating water collection tank (29-1), and connected to the circulating water collection tank (29-1);
a water storage tank component (29-3) configured to store primarily filtered circulating water coming from the circulating water collection tank (29-1);
a water supply component (29-4) configured to obtain the primarily filtered circulating water from the circulating water collection tank (29-1) and delivering the primarily filtered circulating water to the water storage tank component (29-3), the water storage tank component (29-3) being connected with a water supply channel configured to deliver the cooling water to the hot-forming mold (1);
a secondary filter (29-5) and/or a tertiary filter (29-6) mounted on the water supply channel and configured to perform secondary and/or tertiary filtration on the cooling water in the water supply channel; and
a high-pressure water pump (29-7) mounted on the water supply pipe (29-8) and configured to adjust water supply pressure in the water supply channel within an adjustable range of 0 to 3 Mpa.

8. The hot-forming apparatus according to any one of claims 1 to 7, further comprising a guiding mechanism (210) mounted in the apparatus frame (21), wherein the upper slider (22) is slidably connected to the guiding mechanism (210), and the lower slider (23) is slidably mounted in the apparatus frame (21) and is slidable from inside to outside of the apparatus frame (21) for mold replacement.

9. A hot-forming system, comprising the hot-forming apparatus (2) according to any one of claims 1 to 8.

10. The hot-forming system according to claim 9, further comprising a tunnel furnace, a workstation loading device (32), an automatic loading robot (33), a gantry manipulator (34), and a medium supply and recovery device (35), wherein
the tunnel furnace is provided with a workpiece placement part (31-1), a heating zone (31-2), a heat retention zone (31-3), and an in-furnace gripping zone (31-4) that are sequentially arranged from a loading end to an unloading end of the tunnel furnace;
the automatic loading robot (33) is configured to grip a workpiece (4) from the workstation loading device (32) and place the workpiece (4) at the workpiece placement part (31-1); and
the hot-forming apparatus (2) is located between the gantry manipulator (34) and the medium supply and recovery device (35), and the gantry manipulator (34) is configured to move the workpiece (4) from the in-furnace gripping zone (31-4) to the hot-forming apparatus (2).

11. The hot-forming system according to claim 10, wherein
the gantry manipulator (34) comprises a first support column (34-1), a second support column (34-2), a transverse support member (34-3), a gripping mechanism (34-4), and a mechanism motion assembly (34-5);
the first support column (34-1) and the second support column (34-2) are respectively arranged at two ends of the transverse support member (34-3), and the gripping mechanism (34-4) is suspended from the bottom of the mechanism motion assembly (34-5) by a fourth-axis connecting mechanism;
the gripping mechanism (34-4) comprises a gripping frame (34-4-1), a gripping pneumatic cylinder (34-4-2), a gripping transmission rod (34-4-3), a transmission rod fixing sleeve (34-4-4), and a transmission lever (34-4-5);
the gripping pneumatic cylinder (34-4-2) is mounted on the gripping frame (34-4-1), a pneumatic cylinder protective cover (34-4-6) is provided at an outer side of the gripping pneumatic cylinder (34-4-2), the gripping transmission rod (34-4-3) is slidably connected to the transmission rod fixing sleeve (34-4-4), one end of the gripping transmission rod (34-4-3) is connected to the gripping pneumatic cylinder (34-4-2), and the other end of the gripping transmission rod (34-4-3) is connected to the transmission lever (34-4-5); and
a first hook (34-4-7) is provided at the bottom of the gripping frame (34-4-1), and a second hook (34-4-8) is provided at the bottom of the transmission lever (34-4-5), wherein
when the workpiece (4) is moved to the in-furnace gripping zone (31-4) of the tunnel furnace, the first hook (34-4-7) is configured to engage with one end of the workpiece (4), and the gripping pneumatic cylinder (34-4-2) is configured to drive the gripping transmission rod (34-4-3) to translate, so as to drive the transmission lever (34-4-5) to swing, so that the transmission lever (34-4-5) drives the second hook (34-4-8) to swing to engage with the other end of the workpiece (4).

12. The hot-forming system according to claim 11, wherein
the mechanism motion assembly (34-5) comprises a mechanism motion support body and a fourth-axis servo motor (34-5-1), a motor protective cover (34-5-2), a harmonic reducer (34-5-3), a driving component (34-5-4), and a heat insulation board (34-5-5) that are mounted on the mechanism motion support body; and
the motor protective cover (34-5-2) covers the fourth-axis servo motor (34-5-1), the harmonic reducer (34-5-3) is connected between the fourth-axis servo motor (34-5-1) and the driving component (34-5-4), the heat insulation board (34-5-5) is mounted at an end of the driving component (34-5-4) close to the gripping mechanism (34-4), and the gripping mechanism (34-4) is mounted on the driving component (34-5-4) and is movable along with the driving component (34-5-4); and
a cooling component (34-5-6) is further mounted on the mechanism motion support body and is configured to introduce cool air into the mechanism motion support body to cool the fourth-axis servo motor (34-5-1).
